# EUROPÄISCHE PATENTANMELDUNG

(11) **EP 4 124 934 A1**
(43) Veröffentlichungstag der Anmeldung: **01.02.2023**
(21) Anmeldenummer: 22185348.4
(22) Anmeldetag: 18.07.2022
(51) Int. Cl.: G06F 3/01

(54) **VERFAHREN ZUM ANSTEUERN EINES GERÄTES, HAUSHALTGERÄT, VERFAHREN ZUM BETREIBEN EINES GERÄTES UND GERÄT**

(30) Priorität: 30.07.2021 BE 202105605
(71) Anmelder: Miele & Cie. KG, 33332 Gütersloh (DE)
(72) Erfinder: Carsten, Daniel, 33615 Bielefeld (DE); Tophinke, Alina, 59302 Oelde (DE); Strothmann, Jörn, 33829 Borgholzhausen (DE); Pfab, Isabel, 33330 Gütersloh (DE); Kohnert, Lars, 33659 Bielefeld (DE)

(57) **Zusammenfassung**

Die Erfindung betrifft ein Verfahren zum Ansteuern eines Gerätes (105), das zu einem Haushaltgerät (100) extern angeordnet ist. Das Verfahren umfasst einen Schritt des Einlesens eines Bewegungssignals (140), das eine erkannte vorbestimmte Geste vor einer Sensoreinrichtung (125) des Haushaltgerätes (100) repräsentiert; und einen Schritt des Ausgebens eines Ausführungssignals (155) zu einer Schnittstelle des Gerätes (105), um eine vorbestimmte Funktion im Gerät (105) unter Verwendung des Bewegungssignals (140) anzusteuern.

## Beschreibung

Die Erfindung betrifft ein Verfahren zum Ansteuern eines Gerätes, ein Haushaltgerät, ein Verfahren zum Betreiben eines Gerätes und ein Gerät.

Aktuell können Haushaltsgerät mit Apps auf mobilen Endgeräten zum Abruf von Geräteinformationen verwendet werden.

Der Erfindung stellt sich die Aufgabe ein verbessertes Verfahren zum Ansteuern eines Gerätes, ein verbessertes Haushaltgerät, ein verbessertes Verfahren zum Betreiben eines Gerätes und ein verbessertes Gerät zu schaffen.

Erfindungsgemäß wird diese Aufgabe durch ein Verfahren zum Ansteuern eines Gerätes, Haushaltgerät, Verfahren zum Betreiben eines Gerätes und Gerät mit den Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen darin, dass ein Gerät, welches an einem Haushaltgerät extern angeordnet ist, berührungslos angesteuert werden kann.

Die vorliegende Erfindung schafft ein Verfahren zum Ansteuern eines Gerätes, das zu einem Haushaltgerät extern angeordnet ist, wobei das Verfahren die folgenden Schritte umfasst:
Einlesen eines Bewegungssignals, das eine erkannte vorbestimmte Geste vor einer Sensoreinrichtung des Haushaltgerätes repräsentiert; und
Ausgeben eines Ausführungssignals zu einer Schnittstelle des Gerätes, um eine vorbestimmte Funktion im Gerät unter Verwendung des Bewegungssignals anzusteuern.

Unter einem Haushaltgerät kann beispielsweise ein Gerät für die Küche verstanden werden. Dabei kann es sich um einen Backofen, eine Herdplatte, eine Dunstabzugshaube oder einen Dampfgarer handeln. Bei einem externen Gerät kann es sich beispielsweise um ein Smartphone oder ein Tablet handeln. Der Benutzer, oder allgemein eine Person, bereitet zum Beispiel ein Gericht in der Küche zu. Bei der Zubereitung orientiert er sich an einem Rezept, welches ihm auf seinem Tablet oder Smartphone angezeigt wird.

Wenn der Benutzer bzw. die Person nun beispielsweise auf dem Tablet oder dem Smartphone weiterblättern möchte, um zur nächsten Seite des Rezeptes zu gelangen, kann er dies gemäß dem hier vorgestellten Ansatz über das Haushaltgerät steuern. Dazu liest das Haushaltgerät ein Bewegungssignal ein. Bei dem Bewegungssignal kann es sich um eine bestimmte Geste handeln, beispielsweise eine Wischbewegung. Diese Bewegung wird von einer Sensoreinrichtung des Haushaltgerätes erkannt. Bei der Sensoreinrichtung kann es sich um einen Gestensensor handeln. Anschließend wird ein Ausführungssignal an eine Schnittstelle beispielsweise des Smartphones oder Tablets ausgegeben. Das Ausführungssignal repräsentiert eine Ausführung einer vorbestimmten Funktion beispielsweise im Smartphone oder Tablet. Bei der vorbestimmten Funktion kann es sich beispielsweise um das Umblättern einer Seite auf dem Smartphone oder dem Tablet handeln.

Der hier vorgestellte Ansatz, der auch als Hausgerät mit Gestensensor zur Steuerung eines externen Gerätes bezeichnet werden kann, ermöglicht eine berührungslose Bedienung eines Gerätes, z. B. während eines Kochprozesses mit schmutzigen Händen.

Das Haushaltgerät ist beispielsweise als Backofen, Dampfgarer, aber auch Kochfeld oder Dunstabzugshaube ausgebildet. Das Haushaltgerät ist mit einer Sensoreinrichtung ausgestattet. Das externe Gerät kann ein mobiles Endgerät, wie z. B. ein Smartphone oder ein Tablet sein. Es sollte mit dem Haushaltgerät vernetzt werden können, beispielsweise mittels WLAN oder Bluetooth, und es sollte mindestens eine Funktion über die Gestenerkennung am Hausgerät auf dem mobilen Endgerät ausgelöst werden können. Hier wäre die Verbindung über eine App naheliegend, da diese auf einem mobilen Endgerät installiert werden kann. Darüber hinaus vernetzt es das Hausgerät mit dem Gestensensor und fragt Geräteinformationen ab. So kann eine Gestenerkennung per App abgefragt werden und zur Auslösung von Funktionen in der App führen, wie z.B. das Weiterblättern von Rezepten.

Mit dieser Erfindung kann es möglich sein, ein externes, mobiles Endgerät, wie z. B. ein Smartphone oder ein Tablet, über einen Gestensensor in einem Hausgerät zu steuern. So können aufgerufene Kochrezepte in der App des externen Gerätes über den Gestensensor des Hausgeräts berührungslos weitergeblättert werden, um während eines Kochprozesses mit schmutzigen Händen eine berührungslose Bedienung auch bei einem externen Gerät ohne Gestensensor zu ermöglichen. Bisher ist eine berührungslose Bedienung eines externen Gerätes durch ein Hausgerät nicht möglich.

Gemäß einer Ausführungsform kann im Schritt des Einlesens ein Verlauf von optischen Abbildern einer Person oder eines Körperteils der Person vor der Sensoreinrichtung erfasst werden und aus dem Verlauf der Abbilder eine Bewegung der Person oder des Körperteils der Person erkannt werden, um die vorbestimmte Geste zu identifizieren. Dies bietet den Vorteil, dass eine berührungslose Erfassung einer Person erfolgen kann.

Das Verfahren kann gemäß einer Ausführungsform einen Schritt des Generierens des Bewegungssignals aufweisen, wenn als vorbestimmte Geste eine Wischbewegung und/oder eine Annäherung eines Körperteils einer Person zu der Sensoreinrichtung erkannt wird. Dies bietet den Vorteil, dass das Verfahren die erfassten Bewegungen unterscheiden kann und nur ein Bewegungssignal generiert, wenn beispielsweise eine Wischbewegung und/oder eine bestimmte Anzahl von Fingern erfasst wird.

Gemäß einer Ausführungsform kann im Schritt des Ausgebens das Ausführungssignal derart ausgegeben werden, dass als vorbestimmte Funktion ein Seitenwechsel eines auf dem Gerät angezeigten Dokuments angesteuert wird. Dies bietet den Vorteil, dass der Seitenwechsel berührungslos auf dem Dokument durchgeführt werden kann. Dadurch kann eine Verschmutzung des Gerätes vermieden werden, da der Benutzer nicht mit schmutzigen Händen das Gerät ansteuern braucht.

Eine entsprechende Steuervorrichtung kann gemäß einer Ausführungsform ausgebildet sein, um die Schritte des Verfahrens in entsprechenden Einheiten auszuführen und/oder anzusteuern.

Ein entsprechendes Haushaltgerät mit einer Steuervorrichtung kann gemäß einer Ausführungsform ausgebildet sein, um im einsatzbereiten Zustand stationär betrieben zu werden, insbesondere wobei das Haushaltgerät als ein Kochfeld, als ein Backofen, als ein Dampfgarer und/oder als eine Dunstabzugshaube ausgebildet sein kann.

Auch ist es von Vorteil gemäß einer Ausführungsform ein Verfahren zum Betreiben eines Gerätes vorzusehen, wobei das Verfahren die folgenden Schritte aufweisen kann:
Einlesen eines Ausführungssignals von einem Haushaltgerät, wobei das Ausführungssignal unter Verwendung eines Verfahrens gemäß einem hier vorgestellten Ansatz erstellt wurde; und
Ausführen der vorbestimmten Funktion ansprechend auf das eingelesene Ausführungssignal.

Gemäß einer Ausführungsform kann im Schritt des Ausführens als vorbestimmte Funktion ein Seitenwechsel eines auf dem Gerät angezeigten Dokuments ausgeführt werden. Dies bietet den Vorteil, dass der Seitenwechsel berührungslos auf dem Dokument durchgeführt werden kann. Dadurch kann eine Verschmutzung des Gerätes vermieden werden, da der Benutzer nicht mit schmutzigen Händen das Gerät ansteuern muss.

Eine entsprechende Steuervorrichtung kann gemäß einer Ausführungsform ausgebildet sein, um die Schritte des Verfahrens in entsprechenden Einheiten auszuführen und/oder anzusteuern.

Ein entsprechendes Gerät mit einer Steuervorrichtung zum Empfangen eines Sensorsignals von einem Haushaltgerät kann gemäß einer Ausführungsform als Smartphone und/oder Tablet ausgebildet sein.

Auch wenn der beschriebene Ansatz anhand eines Haushaltgeräts beschrieben wird, kann das hier beschriebene Haushaltgerät und Gerät sowie die hier beschriebenen Verfahren entsprechend im Zusammenhang mit einem gewerblichen oder professionellen Gerät, beispielsweise Gastronomiegerät eingesetzt werden.

Der hier vorgestellte Ansatz schafft ferner zwei Steuervorrichtungen, die ausgebildet sind, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form von Steuervorrichtungen kann die der Erfindung zugrundeliegende Aufgabe schnell und effizient gelöst werden.

Die Steuervorrichtungen können ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Steuervorrichtungen einlesbares Sensorsignal darstellen. Ein Ausgangssignal kann ein Steuersignal oder ein Datensignal darstellen, das an einer Ausgangsschnittstelle der Vorrichtung bereitgestellt werden kann. Die Steuervorrichtungen können ausgebildet sein, um die Ausgangssignale unter Verwendung einer in Hardware oder Software umgesetzten Verarbeitungsvorschrift zu bestimmen. Beispielsweise können die Steuervorrichtungen dazu eine Logikschaltung, einen integrierten Schaltkreis oder ein Softwaremodul umfassen und beispielsweise als ein diskretes Bauelement realisiert sein oder von einem diskreten Bauelement umfasst sein.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer der Steuervorrichtungen ausgeführt, so kann das Programmprodukt oder Programm zur Durchführung, Umsetzung und/oder Ansteuerung der Schritte des Verfahrens nach einer der vorstehend beschriebenen Ausführungsformen verwendet werden.

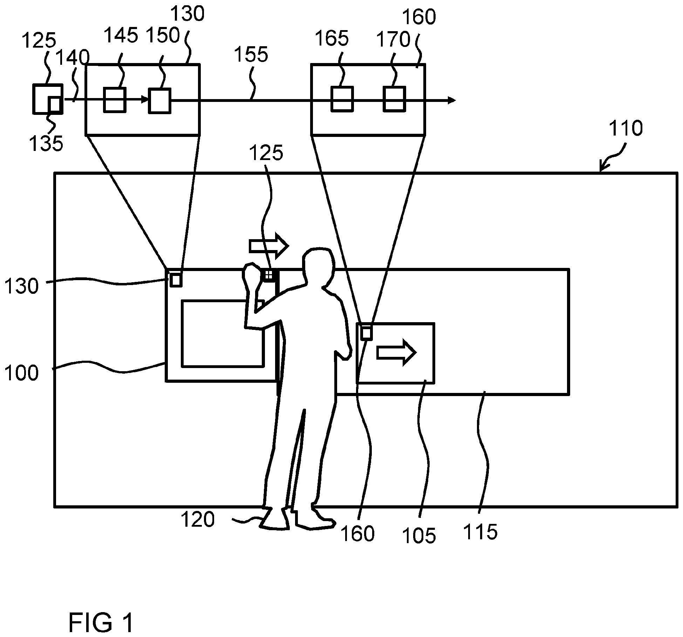

Ein Ausführungsbeispiel der Erfindung ist in den Zeichnungen rein schematisch dargestellt und wird nachfolgend näher beschrieben. Es zeigt
- .Figur 1: eine Darstellung eines Ausführungsbeispiels eines Haushaltgerätes mit einem Gerät;
- Figur 2: ein Ablaufdiagramm eines Ausführungsbeispiels eines Verfahrens zum Ansteuern eines Gerätes; und
- Figur 3: ein Ablaufdiagramm eines Ausführungsbeispiels eines Verfahrens zum Betreiben eines Gerätes.

Figur 1 zeigt eine Darstellung eines Ausführungsbeispiels eines Haushaltgerätes 100 mit einem Gerät 105.

Das Haushaltgerät 100 ist beispielhaft als Backofen ausgeformt und zwischen Schränken innerhalb einer Küche 110 integriert. Gemäß einem Ausführungsbeispiel ist das Gerät 105 als Tablet ausgeformt und befindet sich auf einer Arbeitsfläche 115 der Küche 110, angelehnt an eine Küchenwand. Ein Benutzer 120 steht beispielhaft zwischen dem Haushaltgerät 100 und dem Gerät 105.

Gemäß einem Ausführungsbeispiel bereitet der Benutzer 120 ein Essen in der Küche 110 zu. Die Zubereitung erfolgt beispielsweise nach Rezept, welches sich auf dem Gerät 105 befindet. Wenn der Benutzer 120 nun auf dem Gerät 105 eine Seite im Rezept weiterblättern möchte, lässt er diese Funktion berührungslos über das Haushaltgerät 100 ausführen. Dazu weist das Haushaltgerät 100 beispielhaft eine Sensoreinrichtung 125 auf. Die Sensoreinrichtung 125 ist beispielhaft als Kamera ausgeformt und ausgebildet, um eine Bewegung vor der Sensoreinrichtung 125 zu erfassen. Dabei wird ein Verlauf von optischen Abbildern des Benutzers 120 vor der Sensoreinrichtung erfasst und aus dem Verlauf der Abbilder wird eine Bewegung des Benutzers 120 erkannt, um die vorbestimmte Geste zu identifizieren. Eine Generierungseinrichtung 135 generiert ein Bewegungssignal 140, wenn als vorbestimmte Geste eine Wischbewegung und/oder eine Annäherung eines Körperteils des Benutzers 120 zu der Sensoreinrichtung 125 erkannt wird. Das Bewegungssignal wird anschließend in Steuervorrichtung 130 von einer Einleseeinrichtung 145 als Bewegungssignal 140 eingelesen. Das Bewegungssignal 140 repräsentiert die erkannte vorbestimmte Geste vor der Sensoreinrichtung 125 des Haushaltgerätes 100, beispielsweise eine Wischbewegung der Hand des Benutzers 120.

Nachdem das Bewegungssignal 140 von der Einleseeinrichtung 145 eingelesen wurde, wird von einer Ausgabeeinrichtung 150 ein Ausführungssignal 155 ausgegeben. Das Ausführungssignal 155 wird an eine Steuervorrichtung 160 des Gerätes 105 ausgegeben, um eine vorbestimmte Funktion im Gerät 105 unter Verwendung des Bewegungssignals 140 anzusteuern. Dazu wird in der Steuervorrichtung 160 des Gerätes 105 das Ausführungssignal 155 von einer Einleseeinrichtung 165 eingelesen. Anschließend wird das Ausführungssignal 155 an eine Ausführungseinrichtung 170 weitergeleitet. Die Ausführungseinrichtung 170 führt die vorbestimmte Funktion, beispielsweise einen Seitenwechsel eines auf dem Gerät 105 angezeigten Dokuments, aus.

Das Haushaltgerät 100 besitzt eine Sensoreinrichtung 125, die auch als Gestensensor bezeichnet werden kann. Dies kann ein optischer Sensor hinter der Blende, z. B. ein Time-of-Flight/Lidar System, oder eine Kamera, ein Radarsensor im Gerät, oder ein kapazitiver Sensor hinter einer Front sein, der berührungslose Handgesten erkennt. Die Gesten sind beispielhaft Wischbewegungen, oder eine Annäherung der Hand in Richtung der Sensoreinrichtung 125, bzw. der Geräteblende sein. Es sind aber auch statische Formen möglich, die man mit der Hand bildet, z. B. eine Handfläche, eine Faust, eine bestimmte Anzahl hochgehaltener Finger, oder eine andere dynamische Bewegung mit der Hand, wie z. B. ein Winken, die über eine Sensoreinrichtung 125, die auch als Kamerasystem bezeichnet werden kann, im Haushaltgerät 100 erkannt werden.

Das Haushaltgerät 100 ist beispielhaft über eine mobile App mit einem externen Gerät 105, wie z. B. einem Smartphone oder einem Tablet, vernetzt. Über die App werden Geräteinformationen empfangen, so auch Signale, die aufgrund einer erkannten Geste entstehen und zu einem Steuern der App-Funktionen führen. Eine solche App-Funktion stellt z. B. das Weiterblättern in einem Rezept dar, das der Benutzer 120 in der App geöffnet hat. Wird das externe Gerät 105 z. B. auf der Arbeitsfläche 115 an die Wand gelehnt, oder an eine Wandhalterung befestigt, folgt der Benutzer 120 den einzelnen Schritten des Rezeptes. Wenn es zu einem Weiterblättern der Rezeptseiten kommt, führt der Benutzer 120 dies berührungslos über eine entsprechende Geste am Haushaltgerät 100 durch. Die Möglichkeit dazu wird beispielhaft im Vorfeld in der App eingestellt, so dass dies auch am Display des Haushaltgeräts 100 angezeigt wird. Diese Funktion ist auch jederzeit am Haushaltgerät 100 über die Touchbedienung abbrechbar bzw. unterbrechbar.

Gemäß einem Ausführungsbeispiel wird ein Alarm des Gerätes 105 mit einer Geste am Haushaltgerät 100 quittiert. Dies ist der Fall, wenn das Gerät 105 außer Reichweite liegt oder sich in der Hosentasche des Benutzers 120 befindet, dieser aber gerade schmutzige Hände hat, oder anderweitig im Kochprozess beschäftigt ist, so dass eine schnelle Quittierung über eine berührungslose Geste am Haushaltgerät 100 in unmittelbarer Nähe wünschenswert ist, da so der permanente Alarm ausgeschaltet wird und nicht mehr beim Kochprozess stört.

Gemäß einem weiteren Ausführungsbeispiel wird anstelle einer Sensoreinrichtung 125 zur Steuerung des Gerätes 105 ein vorhandener Drehknebel, Dreh-Drück-Steller, bzw. Drehwahlschalter verwendet. Das Wechseln der Rezeptseiten per Wischgeste lässt sich direkt auf die Drehrichtung übertragen. Es bietet eine haptische Alternative zur Touchbedienung des externen Gerätes 105, erlaubt aber die ergonomisch vorteilhaftere Bedienung vor der Arbeitsfläche am Haushaltgerät 100, anstatt am angelehnten externen Gerät 105 in größerer Reichweite.

Gemäß einem weiteren Ausführungsbeispiel wird zur Steuerung eines externen Gerätes 105 die Aktivierung eines Sprachassistenten, z. B. Alexa, per berührungsloser Geste aktiviert. Durch eine Annäherungs-, Halte- oder Wischgeste vor dem Haushaltgerät 100 wird der Sprachassistent so aktiviert, dass der anstehende Sprachbefehl direkt das Haushaltgerät 100 steuert, ohne dass ein Key-Word, oder ein längerer Sprachsatz verwendet wird. Prinzipiell wird beispielhaft dann ein eindeutiges Wort wie "Tür" für die Türöffnung, "Licht" für das Licht ein- und ausschalten, oder "Start" zum Starten des voreingestellten Programms, verwendet. Diese Einstellung stellt der Benutzer 120 bewusst am Gerät 105 ein, so dass es hier keine unerwünschten Fehlaufrufe gibt.

Der hier vorgestellte Ansatz ermöglicht eine berührungslose Steuerung des Gerätes 105, auch wenn es selbst nicht über eine Sensoreinrichtung 125 verfügt. Das externe Gerät 105 ist auch mit schmutzigen Händen bedienbar und bleibt dabei, genau wie das Haushaltgerät 100, sauber. Die Bedienung erfolgt für den Benutzer 120 vor der Arbeitsfläche am Haushaltgerät 100, auch wenn sich das externe Gerät 105 am anderen Ende der Arbeitsfläche 115 außerhalb der unmittelbaren Reichweite des Benutzers 120 befindet. Es erfolgt eine komfortable Bedienung, die ergonomisch für den Benutzer 120 ist, selbst wenn das externe Gerät 105 über eine Sensoreinrichtung verfügt.

Ein weiterer ergonomischer Vorteil bietet sich bei einer Sensoreinrichtung in einem Kochfeld an, bei dem die Geste zum Weiterblättern durch eine Wischbewegung durchgeführt wird, in der die Handfläche parallel zur Arbeitsfläche liegt und nicht senkrecht dazu, wie es bei einem optischen Sensor, der in Richtung Nutzer zeigt, überwiegend der Fall ist. Bei einer Sensoreinrichtung der in Richtung des Benutzers 120 zeigt, bewegt dieser seine schmutzigen Hände nicht über die Arbeitsfläche, wodurch sich ansonsten Schmutz von den Händen löst und auf die darunter befindlichen Gegenstände, oder Lebensmittel fällt.

Beim Steuern des externen Gerätes 105 durch einen Drehwahlschalter ergeben sich ergonomische Vorteile, bzw. eine alternative Bedienung. Beim Aktivieren eines Sprachassistenten durch eine Geste vor dem Haushaltgerät 100 ergibt sich ein Kontextbezug, der den Sprachbefehl auf ein einzelnes eindeutiges Wort reduziert.

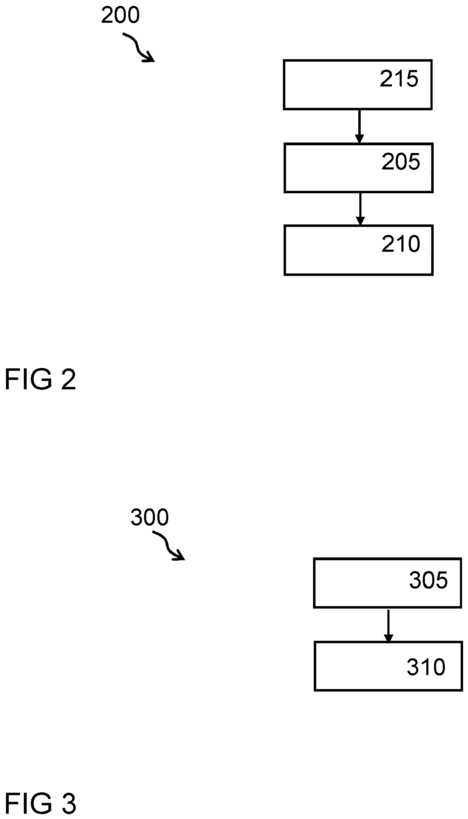

Figur 2 zeigt ein Ablaufdiagramm eines Ausführungsbeispiels eines Verfahrens 200 zum Ansteuern eines Gerätes, das zu einem Haushaltgerät extern angeordnet ist. Das Verfahren 200 umfasst einen Schritt 205 des Einlesens eines Bewegungssignals, das eine erkannte vorbestimmte Geste vor einer Sensoreinrichtung des Haushaltgerätes repräsentiert. Im Schritt 205 des Einlesens wird gemäß einem Ausführungsbeispiel ein Verlauf von optischen Abbildern einer Person vor der Sensoreinrichtung erfasst und aus dem Verlauf der Abbilder eine Bewegung einer Person erkannt, um die vorbestimmte Geste zu identifizieren. Ferner umfasst das Verfahren 200 einen Schritt 210 des Ausgebens eines Ausführungssignals zu einer Schnittstelle des Gerätes, um eine vorbestimmte Funktion im Gerät unter Verwendung des Bewegungssignals anzusteuern. Gemäß einem Ausführungsbeispiel wird im Schritt 210 des Ausgebens das das Ausführungssignals derart ausgegeben, dass als vorbestimmte Funktion ein Seitenwechsel eines auf dem Gerät angezeigten Dokuments angesteuert wird. Das Verfahren 200 umfasst außerdem einen Schritt 215 des Generierens des Bewegungssignals, wenn als vorbestimmte Geste eine Wischbewegung und/oder eine Annäherung eines Körperteils einer Person zu der Sensoreinrichtung erkannt wird.

Figur 3 zeigt ein Ablaufdiagramm eines Ausführungsbeispiels eines Verfahrens 300 zum Betreiben eines Gerätes. Das Verfahren 300 umfasst einen Schritt 305 des Einlesens eines Ausführungssignals von einem Haushaltgerät. Ferner umfasst das Verfahren 300 einen Schritt 310 des Ausführens der vorbestimmten Funktion ansprechend auf das eingelesene Ausführungssignal. Gemäß einem Ausführungsbeispiel wird im Schritt 310 des Ausführens als vorbestimmte Funktion ein Seitenwechsel eines auf dem Gerät angezeigten Dokuments ausgeführt.

## Patentansprüche

1. Verfahren (200) zum Ansteuern eines Gerätes (105), das zu einem Haushaltgerät (100) extern angeordnet ist, wobei das Verfahren (200) die folgenden Schritte umfasst:
Einlesen (305) eines Bewegungssignals (140), das eine erkannte vorbestimmte Geste vor einer Sensoreinrichtung (125) des Haushaltgerätes (100) repräsentiert; und
Ausgeben (310) eines Ausführungssignals (155) zu einer Schnittstelle des Gerätes (105), um eine vorbestimmte Funktion im Gerät (105) unter Verwendung des Bewegungssignals (140) anzusteuern.

2. Verfahren (200) gemäß Anspruch 1, wobei im Schritt (205) des Einlesens ein Verlauf von optischen Abbildern einer Person (120) oder eines Körperteils der Person (120) vor der Sensoreinrichtung (125) erfasst wird und aus dem Verlauf der Abbilder eine Bewegung der Person (120) der des Körperteils der Person (120) erkannt wird, um hieraus die vorbestimmte Geste zu identifizieren.

3. Verfahren (200) gemäß einem der vorangegangenen Ansprüche, mit einem Schritt (215) des Generierens des Bewegungssignals (140), wenn als vorbestimmte Geste eine Wischbewegung und/oder eine Annäherung eines Körperteils einer Person (120) zu der Sensoreinrichtung (125) erkannt wird.

4. Verfahren (200) gemäß einem der vorangegangenen Ansprüche, wobei im Schritt (210) des Ausgebens das Ausführungssignal (155) derart ausgegeben wird, dass als vorbestimmte Funktion ein Seitenwechsel eines auf dem Gerät (105) angezeigten Dokuments angesteuert wird.

5. Steuervorrichtung (130), die ausgebildet ist, um die Schritte des Verfahrens (200) gemäß einem der Ansprüche 1 bis 4 in entsprechenden Einheiten (135, 145, 150) auszuführen und/oder anzusteuern

6. Haushaltgerät (100) mit einer Steuervorrichtung (130) gemäß Anspruch 5, wobei das Haushaltgerät (100) ausgebildet ist, um im einsatzbereiten Zustand stationär betrieben zu werden, insbesondere wobei das Haushaltgerät (100) als ein Kochfeld, als ein Backofen, als ein Dampfgarer und/oder als eine Dunstabzugshaube ausgebildet ist.

7. Verfahren (300) zum Betreiben eines Gerätes (105), wobei das Verfahren (300) die folgenden Schritte umfasst:
Einlesen (305) eines Ausführungssignals (155) von einem Haushaltgerät (100), wobei das Ausführungssignal (155) unter Verwendung eines Verfahrens gemäß einem der Ansprüche 1 bis 4 erstellt wurde; und
Ausführen (310) einer vorbestimmten Funktion ansprechend auf das eingelesene Ausführungssignal (155).

8. Verfahren (300) gemäß Anspruch 7, wobei im Schritt (310) des Ausführens als vorbestimmte Funktion ein Seitenwechsel eines auf dem Gerät (105) angezeigten Dokuments ausgeführt wird.

9. Steuervorrichtung (160), die ausgebildet ist, um die Schritte des Verfahrens (300) gemäß einem der Ansprüche 7 bis 8 in entsprechenden Einheiten (165, 170) auszuführen und/oder anzusteuern

10. Gerät (105) mit einer Steuervorrichtung (160) gemäß Anspruch 7 zum Empfangen eines Sensorsignals (155) von einem Haushaltgerät (100), wobei das externe Gerät (105) als Smartphone und/oder Tablet ausgebildet ist.

11. Computer-Programmprodukt mit Programmcode zur Durchführung eines der Verfahren (200; 300) gemäß einem der Ansprüche 1 bis 4 oder 7 bis 8, wenn das Computer-Programmprodukt auf einer Steuervorrichtung (130, 160) ausgeführt wird.
